Europäisches Patentamt

European Patent Office

Office européen des brevets

(11) Publication number: **0 311 131**
**A2**

## (12) EUROPEAN PATENT APPLICATION

(21) Application number: 88116711.8

(22) Date of filing: 08.10.88

(51) Int. Cl.⁴: **B60G 17/00** , **B60T 8/32**

(30) Priority: 08.10.87 JP 254220/87

(43) Date of publication of application:
**12.04.89 Bulletin 89/15**

(84) Designated Contracting States:
**DE FR GB**

(71) Applicant: **Mazda Motor Corporation**
**No. 3-1, Shinchi Fuchu-cho**
**Aki-gun Hiroshima-ken(JP)**

(72) Inventor: **Umehira, Shinji**
**c/o Mazda Motor Corp. No. 3-1 Shinchi**
**Fuchu-cho Aki-gun Hiroshima-ken(JP)**

(74) Representative: **LOUIS, PÖHLAU, LOHRENTZ &**
**SEGETH**
**Ferdinand-Maria-Strasse 12**
**D-8130 Starnberg(DE)**

(54) **Suspension controlling apparatus of a vehicle.**

(57) The slip control apparatus is provided, which prevents an excessive degree of slippage on pavement from occurring on the driven wheel by controlling a magnitude of a torque to be applied to the driven wheel.

Either of a shock absorber or suspension spring of the suspension is at least of the type variable, that is, in the damping force or the spring coefficient.

At least one of the damping force or the spring coefficient is arranged so as to be rendered larger during a slip control by means of the suspension controlling apparatus.

FIG.2

# SUSPENSION CONTROLLING APPARATUS OF A VEHICLE

## BACKGROUND OF THE INVENTION

The present invention relates to a suspension controlling apparatus of a vehicle provided with a slip control (traction control) apparatus.

## Description of Related Art

Recently, there is a growing tendency that a vehicle is designed such that suspension characteristics are altered. For instance, Japanese Utility Model Publication (laid-open) No. 109,008/1980 discloses the function that an understeering characteristic is provided at the time of high speeds by making a damping force of a shock absorber relatively smaller on the rear wheel side than on the front wheel side while an oversteering characteristic is provided at the time of low speeds by making a damping force of the shock absorber relatively larger on the rear wheel side than on the front wheel side.

In the event where an excessive degree of slippage of the driven wheel on pavement occurs for a vehicle such as an automobile designed so as to be driven by a rotational force of wheels, the rotational force of the wheels may not effectively act as a driving force of the vehicle, thereby leading to a change in a behavior of the vehicle. In other words, operability is changed for a vehicle of the type in which front wheels are driven while rear wheels are likely to slip transversely for a vehicle of the type in which the rear wheels are driven.

In order to prevent the change in such a behavior, it is sufficient that a rotational torque (a driving torque) of the driven wheels is reduced so as not to cause an excessive degree of slippage to arise at the driven wheels. A control over such an excessive of slippage, however, is extremely difficult in the case that a driver operates an accelerator to control the slippage because an occurrence of such an excessive degree of slippage could be usually perceived for the first time after a behavior of the vehicle has changed.

A slip control is another type of prevention of an excessive degree of slippage on the driven wheels leading to realizing the effictive driving and a stability in drivability. The slip control is such that, at the time when a degree of slippage is detected to be in excess beyond a predetermined slip ratio or value as a result of detection on degrees of slippage on the driven wheels, a brake and/or a throttle are or is controlled to reduce a rotational torque of the driven wheels, thereby reducing a slippage (See Japanese Patent Publication (laid-open) No. 22,948/1983, U. S. Patent No. 4,762,196, etc.).

In instances, however, where such a slip control is implemented with a vehicle, for example, of the rear wheel drive type, at the time when a degree of slippage on the driven wheels increases during acceleration, a rotational torque of the driven wheels is reduced, thus adding a downward force to a suspension on the driven rear wheels side and consequently causing a so-called "declining phenomenon" and recovering back to the original position as the slip control is released. As a result, a forward and rearward portion of the vehicle is caused to be alternately pivoted upwardly or downwardly as the slip control is discontinuously executed, and a so-called "pitching" occurs. The tendency of causing the pitching is particularly remarkable for the vehicle with only the rear wheels driven.

The pitching is a phenomenen that the undriven wheels are caused to rise and fall alternately as accleration is applied. The pitching phenomenon becomes the cause of a car sickness as well as providing a feeling of physical disorder or unpleasantness. Accordingly, demands have been made to prevent the pitching, thus providing a driver and passenger with a pleasant drive.

## SUMMARY OF THE INVENTION

The present invention has the object to provide a suspension controlling apparatus of a vehicle adapted to prevent an unnecessary pivotal movement of the vehicle at the time of the slip control being executed and to provide the driver and passenger with a feeling of pleasant driving.

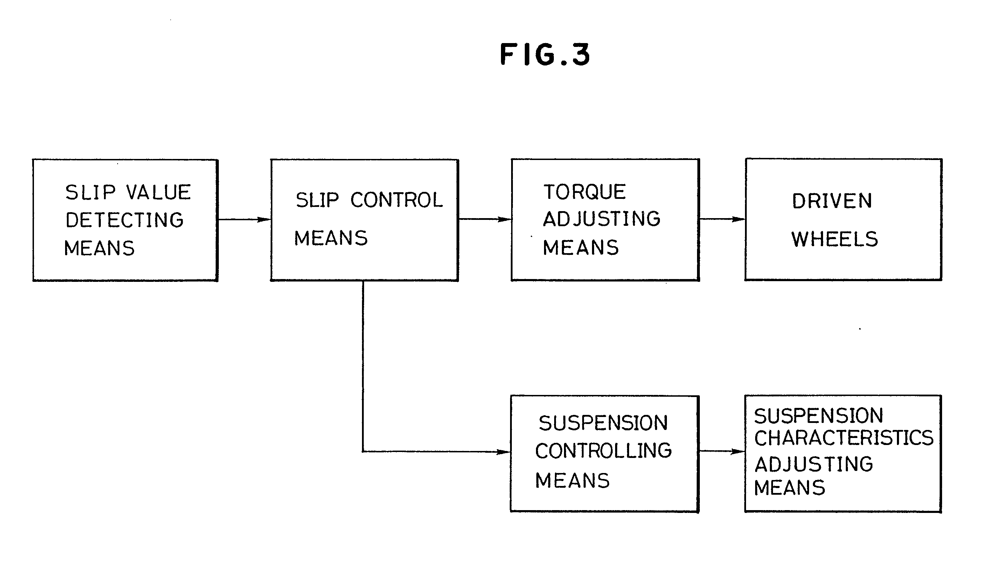

In order to achieve the above object, as diagrammatically shown in FIG. 3, the present invention consists of a suspension controlling apparatus of a vehicle comprising: a slip value detecting means for detecting a slip value of a driven wheel on pavement; a torque adjusting means for adjusting a torque to the driven wheel; a slip control means for reducing the torque to the driven wheel by controlling the torque adjusting means when a slip value detected by the slip value detecting means is equal to or larger than a predetermined value; a suspension characteristics adjusting means for switching suspension characteristics in two stages, "hard" or "soft"; and a suspension controlling means for rendering the suspension characteristics "hard" by controlling the suspension characteristics adjusting means during slip control by the slip control means.

During the execution of the slip control, a change in the height of a vehicle body, or a vertical displacement of the wheels with respect to the vehicle body, can be controlled if suspension characteristics are rendered "hard", thus preventing the pitching in association with the slip control.

The suspension characteristics can be made "hard" by making a damping force of a shock absorber large or a spring coefficient of a suspension spring large. In the former case, there may be used a shock absorber of the damping force variable type and, in the latter case, a spring of the spring coefficient variable type, such as an air spring.

During the slip control, the suspension characteristics with respect to all the wheels may be rendered hard or those only for the driven wheels may be rendered hard.

Other objects and advantages of the present invention will become apparent in the course of the following description in conjunction with the drawings.

BRIEF DESCRIPTION OF THE DRAWINGS

FIG. 1 is a diagrammatical view illustrating an overall system of the suspension controlling apparatus as one example according to the present invention.

FIG. 2 is a flow chart illustrating a control example in accordance with the present invention.

FIG. 3 is a block diagram illurating the construction of the present invention.

DETAILED DESCRIPTION OF THE PREFERRED EMBODIMENTS

The present invention will be described more in detail by way of examples in conjunction with the appended drawings.

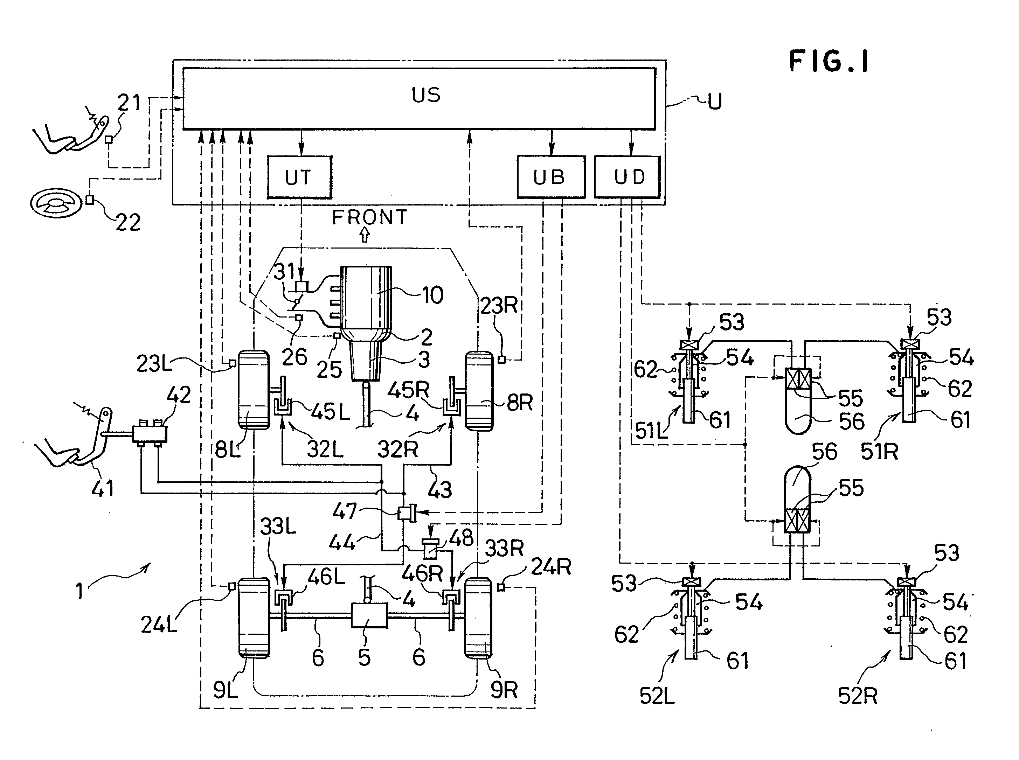

Referring to FIG. 1, an autombile 1 of the rear wheel drive type is provided with a slip control apparatus and a suspension controlling apparatus, which comprises an engine 10 as a driving means, left-hand and right-hand front wheels 8L and 8R as undriven wheels, and left-hand and right-hand rear wheels 9L and 9R, respectively.

A rotational force (driving force) of the engine 10 is designed to be transmitted through a clutch 2, a transmission 3, a propeller shaft 4, a differential gear 5 and an axle shaft 6 to the driven rear wheels 9L and 9R, thus rotating and driving the rear wheels 9L and 9R.

Reference symbol U denotes a control unit and it is designed so as to implement the slip control and control the suspension characteristics in a variable manner by judging a driving condition of the vehicle. The control unit U contains a slip control unit US, a throttle control unit UT, a brake control unit UB and a suspension control unit UD, each of which may be constituted by a microcomputer.

The slip control unit US is designed so as to execute a slip control by operating the throttle 31 of the engine 10 and brakes 33L and 33R for the respective driven rear wheels 9L and 9R by signals output from the throttle control unit UT and the brake control unit UB in response to data given by sensors disposed at corresponding portions of the vehicle body.

The way of the slip control by means of the slip control unit US will be described briefly.

The slip control unit US is designed to permit an input of data from an acclerator opening sensor 21 for detecting a degree of opening of an acclerator, a steered angle sensor 22 for detecting a steered angle of a steering wheel, sensors 23L and 23R for detecting rotational speeds of the respective undriven front wheels 8L and 8R, sensors 24L and 24R for detecting rotational speeds of the respective driven rear wheels 9L and 9R, a clutch sensor 25, and a throttle valve opening sensor 26 for detecting a degree of opening of a throttle valve. And a slip ratio or value of each of the driven left-hand rear wheel 9L and the driven right-hand rear wheel 9R is computed from a difference between rotations of the undriven front wheels 8L and 8R and those of the driven rear wheels 9L and 9R. The opening of the throttle valve 31 is subjected to a feed-back control (throttle control) so as to allow the slip ratio or value to reach a target slip ratio or value, and the brakes 33L and 33R are subjected to a feed-back control (brake control) so as to cause slip ratios or values of the driven left-hand and right-hand rear wheels 9L and 9R to reach each a target slip ratio or value independently from each other.

There will then be described the brake control by means of a brake system and the brake control unit UB.

The brake system for the vehicle 1 is a so-called X-type system, in which the brake 32R for the right-hand front wheel 8R is connected to the brake 33L for the left-hand rear wheel 8L through a passage 43, while the brake 32L for the left-hand front wheel 8L is connected to the brake 33R for the right-hand rear wheel 9L through a passage 44. In this brake system, a brake pedal 41 is operated to provide a braking liquid pressures from a master cylinder 42 through the passages 43 and 44 to brake cylinders 45L, 45R, 46L and 46R of the brakes 32L, 32R, 33L and 33R for the wheels, respectively. Valves 47 and 48 for controlling braking liquid pressures are mounted on the passages 43 and 44 on the driven left-hand rear wheel 9L side and on the driven right-hand rear wheel 9R, respectively, from a connection of the pipes 43 and 44 to a pipe from the master cylinder 42.

The braking liquid pressure controlling valves 47 and 48 each is of the electromagnetic type and is designed so as to close the passages 43 and 44 in response to signals from the brake control unit UB and to allow the brake cylinders 46R and 46L on the driven right-hand and left-hand rear wheels 9R and 9L to generate braking liquid pressures for the slip control from the braking liquid pressure controlling valves 47 and 48, thereby allowing the brakes 33R and 33L to control rotational torques of the respective right-hand and left-hand rear wheels 9R and 9L. As the braking liquid pressure controlling valves 47 and 48 are to be operated separately, the brakes 33R and 33L can be controlled separately, too, thereby braking the right-hand and left-hand rear wheels 9R and 9L individually.

Referring now to FIG. 1, it is shown that a suspension 51L corresponds to the left-hand front wheel 8L, a suspension 51R to the right-hand front wheel 8R, a suspension 52L to the left-hand rear wheel 9L, and a suspension 52R to the right-hand rear wheel 9R. It is noted, however, that the suspensions 51L, 51R, 52L and 52R are shown in FIG. 1 in such a manner as being seprated from the respective wheels for brevity of representation in the drawing.

The suspensions 51L, 51R, 52L and 52R each is provided with a shock absorber, generally referred to as 61, of the type being mounted on the cylinder, which is juxtaposed between an ever-spring weight (a vehicle body) and an under-spring weight (a wheel). The shock absorber 61 can be adjusted in two stages, that is, so as to render its damping force larger ("hard") or smaller ("soft") by altering an area of opening on an orifice disposed on the corresponding piston. The alteration of the damping force may be executed by altering an area of opening on the orifice through a rod disposed in a piston rod by means of an electromagnetic actuator 53. It is to be noted herein that the actuator 53 for the front wheel and for the rear wheel may be controlled individually by means of the control unit UD.

A suspension spring for each of the suspensions 51L, 51R, 52L and 52R comprises a coil spring 62 juxtaposed between the over-spring weight and the under-spring weight, and an air spring. A chamber for the air spring is represented by reference numeral 54. The chambers 54 are connected each to an opening and closing valve 55 of the electromagnetic type and a sub-chamber 56. This structure permits a spring coefficient to render larger ("hard") by allowing the air spring chamber 54 to block the sub-chamber 56, while a spring coefficient to render smaller ("soft") by allowing the air spring chamber 54 to communicate with the sub-chamber 56. The opening/closing valves 55 may be designed to be opened or closed at the same time or alternatively may be opened or closed separately by means of the suspension control unit UD.

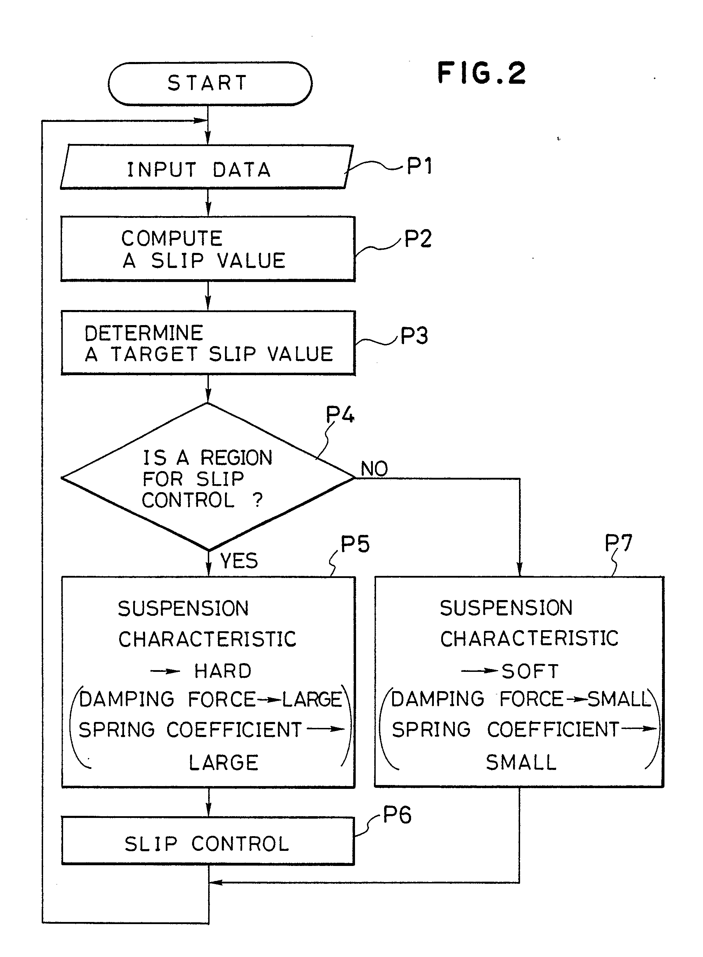

A control example according to the present invention will be described more in detail with reference to the flow chart as shown in FIG. 2. In the following description, reference symbol P denotes a step.

First, at P1, a signal is input from each of the sensors.

At P2, an actual slip value or ratio for the driven left-hand and right-hand rear wheels 9L and 9R on the basis of rotational speeds of the undriven left-hand and right-hand front wheels 8L and 8R, respectively. Then at P3, a target slip value or ratio for each of the rear wheels 9L and 9R is set, for example, using a vehicle speed as a parameter.

At P4, it is judged whether or not a degree of slippage is in a region in which the slip control is to be implemented. The judgment at P4 is executed by judging whether at least a slip value or ratio for each of the rear wheels 9L and 9R to be equal to or larger than a predetermined value.

When it is judged YES at P4, the suspension characteristics are rendered "hard" at P5. In this case, in this embodiment, the suspension is designed to render its damping force for all the wheels large as well as the spring coefficients are rendered large. Then at P6, the slip control is executed. In other words, the opening of the throttle valve 31 is subjected to the feed-back control by menas of the throttle control unit UT so as to reach a target slip value or ratio. And the brakes 33L and 33R for the respective rear wheels 9L and 9R are subjected to the feed-back control independently from each other so as to each reach a target slip value. It is to be understood that the way of the slip control is described in detail in the U. S. patent as referred to hereinabove as related art so that detailed description thereon will be omitted herefrom.

If it is judged NO at P4, the suspension characteristics are rendered "soft" for all of the wheels, that is, the damping force is rendered smaller and the spring coefficient is rendered smaller.

The present invention has been described by way of examples, but it is to be understood that the present invention is not limited thereto and encompasses any variations and modifications, as will described hereinbelow, without departing the spirit from the present invention within the scope thereof.

During the slip control, the suspension characteristics may be made "hard" for the suspension for the driven wheel only. Furthermore, they may be made "hard" by rendering either of the damping force or the spring coefficient larger.

The vehicle to which the suspension controlling apparatus according to the present invention may be of the type in which the front wheels are designed to be drivable and the rear wheels are designed to be undrivable, or of the type in which all the wheels are drivable.

The suspension characteristics during implementation of no slip control may be selected separated by manual operation or by automatic operation, for example, using a vehicle speed as a parameter (corresponding to P7 in FIG. 2).

It is further to be noted that the suspension characteristics may be adjusted at three or more stages. In this case, it is preferred that the suspension characteristics are rendered the most "hard" during the slip control.

While the invention has been particularly shown and described with reference to preferred embodiments thereof, it will be understood by those skilled in the art that the foregoing and other changes in form and details can be made therein without departing from the spirit and scope of the invention.

## Claims

1. A suspension controlling apparatus of a vehicle comprising:
a slip value detecting means for detecting a slip value of a driven wheel on pavement;
a torque adjusting means for adjusting a torque to the driven wheel;
a slip control means for reducing the torque to the driven wheel by controlling said torque adjusting means when a slip value detected by said slip value detecting means is equal to or larger than a predetermined value;
a suspension characteristics adjusting means for switching suspension characteristics in two stages, "hard" or "soft"; and
a suspension controlling means for rendering the suspension characteristics "hard" by controlling said suspension characteristics adjusting means during slip control by said slip control means.

2. A suspension controlling apparatus as claimed in claim 1, wherein said suspension characteristics adjusting means switches at least the suspension characteristics of the driven wheel and renders at least the suspension characteristics thereof "hard" during the slip control.

3. A suspension controlling apparatus as claimed in claim 2, wherein a front wheel is an undriven wheel and a rear wheel is a driven wheel.

4. A suspension controlling apparatus as claimed in claim 2, wherein said suspension characteristics adjusting means switches the suspension characteristics for all the wheels and renders the suspension characteristics therefor "hard".

5. A suspension controlling apparatus as claimed in claim 1, wherein a suspension of the vehicle is of the type variable in a damping force and said suspension characteristics adjusting means switches a magnitude of the damping force at least in two stages, large and small; and the damping force is rendered larger during the slip control.

6. A suspension controlling apparatus as claimed in claim 1, wherein a suspension of the vehicle is of the type variable in a spring coefficient and said suspension characteristics adjusting means switches a magnitude of the spring coefficient at least in two stages, large and small; and the spring coefficient is rendered larger during the slip control.

7. A suspension controlling apparatus as claimed in claim 1, wherein said torque adjusting means is a brake appratus for the driven wheel adapted to apply a braking force to the driven wheel during the slip control.

8. A suspension controlling apparatus as claimed in claim 7, wherein a front wheel is an undrivable wheel and a rear wheel is a drivable wheel.

9. A suspension controlling apparatus as claimed in claim 8, wherein said suspension characteristics adjusting means switches the suspension characteristics at least of the driven wheel adapted to be rendered "hard" during the slip control.

10. A suspension controlling apparatus as claimed in claim 9, wherein a suspension of the vehicle is of the type variable in a damping force and said suspension characteristics adjusting means switches a magnitude of the damping force at least in two stages, large and small; and the damping force is rendered larger during the slip control.

11. A suspension controlling apparatus as claimed in claim 9, wherein a suspension of the vehicle is of the type variable in a spring coefficient and said suspension characteristics adjusting means switches a magnitude of the spring coefficient at least in two stages, large and small; and the spring coefficient is rendered larger during the slip control.

12. A suspension controlling apparatus as claimed in claim 7, wherein said torque adjusting means adjusts an output of an engine.

13. A suspension controlling apparatus as claimed in claim 12, wherein said torque adjusting means adjusts a degree of opening of a throttle valve of the engine.

14. A suspension controlling apparatus as claimed in claim 1, wherein either of a front and rear wheel is a undrivable wheel and the other is a drivable wheel; and
said slip value detecting means comprises a first rotational speed detecting means for detecting a rotational speed of the undrivable wheel; a second rotational speed detecting means for detecting a rotational speed of the drivable wheel; and a slip value determining means for determining a slip value of the drivable wheel on pavement on the basis of the rotational speeds of the undrivable and drivable wheels.

15. A suspension controlling apparatus of a vehicle comprising:
a slip control apparatus adapted to prevent a degree of slippage of a driven wheel on pavement from occurring to an excessive level by controlling a magnitude of a torque to be applied to the driven wheel;
a suspension having a shock absorber of the type variable in a damping force; and
a suspension controlling means adapted to render the damping force of the shock absorber the largest during a slip control by controlling the shock absorber.

16. A suspension controlling apparatus as claimed in claim 15, wherein said suspension is further provided with a suspension spring of the type variable in a spring coefficient; and
said suspension controlling means is designed to render a spring coefficient of said suspension spring the largest during the slip control.

17. A suspension controlling apparatus of a vehicle comprising:
a slip control apparatus adapted to prevent a degree of slippage of a driven wheel on pavement from occurring to an excessive level by controlling a magnitude of a torque to be applied to the driven wheel;
a suspension having a suspension spring of the type variable in a spring coefficient; and
a suspension controlling means adapted to render the spring coefficient of the suspension spring the largest during a slip control by controlling the shock absorber.

FIG.1

EP 0 311 131 A2

**FIG.2**

```
                    ┌─────────────┐
                    │    START    │
                    └─────────────┘
                           │
          ┌────────────────┤
          │                ▼
          │      ╱─────────────────────╲
          │     │     INPUT DATA        │──── P1
          │      ╲─────────────────────╱
          │                │
          │                ▼
          │      ┌─────────────────────┐
          │      │      COMPUTE         │──── P2
          │      │   A SLIP VALUE       │
          │      └─────────────────────┘
          │                │
          │                ▼
          │      ┌─────────────────────┐
          │      │     DETERMINE        │──── P3
          │      │  A TARGET SLIP VALUE │
          │      └─────────────────────┘
          │                │
          │                ▼           P4
          │             ╱─────╲
          │           ╱         ╲
          │         ╱  IS A REGION ╲      NO
          │        │   FOR SLIP     │──────────────┐
          │         ╲  CONTROL ?   ╱                │
          │           ╲         ╱                   │
          │             ╲─────╱                     │
          │                │ YES      P5            │  P7
          │                ▼                        ▼
          │   ┌─────────────────────────┐ ┌─────────────────────────┐
          │   │      SUSPENSION         │ │      SUSPENSION         │
          │   │    CHARACTERISTIC       │ │    CHARACTERISTIC       │
          │   │      → HARD             │ │      → SOFT            │
          │   │ ⎛DAMPING FORCE→LARGE⎞   │ │ ⎛DAMPING FORCE→SMALL⎞  │
          │   │ ⎜SPRING COEFFICIENT →⎟  │ │ ⎜SPRING COEFFICIENT→⎟  │
          │   │ ⎝      LARGE        ⎠   │ │ ⎝      SMALL        ⎠  │
          │   └─────────────────────────┘ └─────────────────────────┘
          │                │                        │
          │                ▼                        │
          │   ┌─────────────────────────┐  P6       │
          │   │      SLIP CONTROL       │──         │
          │   └─────────────────────────┘           │
          │                │                        │
          └────────────────┴────────────────────────┘
```

**FIG.3**